# FASCICULE DE BREVET EUROPEEN

(11) **EP 0 845 563 B1**
(45) Date de publication et mention de la délivrance du brevet: **20.02.2002**
(21) Numéro de dépôt: 97402804.5
(22) Date de dépôt: 21.11.1997
(51) Int. Cl.: E05B 5/00, E05B 1/00

(54) **Poignée pour panneau ouvrant, et coffret dont la porte est équipée d'une telle poignée**
Griff für öffnungsfähigen Flügel, und Schrank wovon die Tür mit einem derartigen Griff ausgerüstet ist
Handle for openable wing, and cabinet having a door equiped with such a handle

(30) Priorité: 27.11.1996 FR 9614532
(43) Date de publication de la demande: 03.06.1998
(73) Titulaire: LEGRAND, F-87000 Limoges (FR); LEGRAND SNC, F-87000 Limoges (FR)
(72) Inventeur: Combas, Christian, 87240 Ambazac (FR); Coste, Gilles, 87350 Panazol (FR)
(74) Mandataire: CABINET BONNET-THIRION

(56) Documents cités:
- WO-A-85/02647
- WO-A-93/09323
- DE-C- 3 712 376
- DE-C- 3 818 187
- DE-C- 4 002 963
- FR-A- 2 716 600
- US-A- 3 850 464
- US-A- 4 912 951

## Description

La présente invention concerne d'une manière générale les poignées du type de celles équipant un quelconque panneau ouvrant pour la commande en ouverture et fermeture de celui-ci.

Ce panneau ouvrant peut par exemple être une porte, telle que la porte d'un coffret, ou, d'une manière plus générale, celle d'une quelconque enveloppe, en particulier d'une armoire, destiné au logement d'un quelconque matériel électrique.

Mais il peut s'agir tout aussi bien d'un couvercle.

Pour certaines applications, au moins, et cela peut être le cas pour les coffrets destinés à être encastrés, il est souhaitable que, au repos, la saillie que fait sur un tel panneau ouvrant la poignée qui l'équipe soit minimale.

Il a été proposé, pour ce faire, dans le certificat d'utilité français enregistré sous le No 95 01548 et publié sous le No 2 716 600, une poignée comportant, d'une part, un boîtier, par lequel elle est adaptée à être rapportée sur le panneau ouvrant à équiper, et, d'autre part, un volet de préhension, qui, par des moyens d'articulation, est monté pivotant sur ce boîtier entre deux positions, à savoir, une position escamotée, de repos, pour laquelle il s'encastre sensiblement à plat dans le boîtier, et une position déployée, de service, pour laquelle il fait au contraire au moins partiellement saillie hors de ce boîtier.

Mais, dans ce certificat d'utilité français, les moyens d'articulation prévus entre le volet de préhension et le boîtier interviennent dans la zone médiane du volet de préhension, afin que celui-ci forme, au-delà de ces moyens d'articulation, une touche sur laquelle il convient d'agir en poussée pour en provoquer le déploiement.

En outre, dans ce certificat d'utilité français, le volet de préhension a, en plan, un contour dissymétrique de part et d'autre de ces moyens d'articulation, celle de ses parties qui forme la touche sur laquelle il convient d'appuyer pour en assurer le déploiement n'ayant pas le même contour que celle à saisir après ce déploiement.

Il en résulte que, pour retrouver, après un changement du sens d'ouverture de la porte, les mêmes conditions d'intervention sur la poignée, il faut procéder au retournement de celle-ci.

En outre, si la porte doit être équipée d'une serrure en complément de la poignée, cette serrure doit quasi impérativement être disposée à côté de la poignée, et donc être visible, au détriment de l'esthétique.

Si, pour être invisible, elle est disposée sous la partie à saisir du volet de préhension, son déport par rapport au plan médian de l'ensemble complique ses conditions d'intervention.

Dans le brevet allemand n° 40 02 963, il est décrit une poignée conforme au préambule de la revendication 1. Le problème de réversibilité de la poignée est ainsi résolu par le fait que le volet de préhension peut être déployé dans deux positions de service symétriques l'une de l'autre par rapport à un plan médian de la poignée qui contient l'axe de pivotement du volet.

Toutefois, dans la mesure où le volet de préhension bascule autour d'un axe d'articulation unique situé dans le plan médian de la poignée, le problème mentionné ci-dessus de manque d'espace disponible pour installer une serrure sous le volet de préhension reste entier. De plus l'ergonomie de la poignée reste médiocre puisque seule la moitié du volet de préhension offre prise à l'utilisateur.

La présente invention a d'une manière générale pour objet une disposition permettant d'éviter ces inconvénients.

De manière plus précise, elle a tout d'abord pour objet une poignée pour panneau ouvrant, du genre comportant, d'une part, un boîtier, par lequel elle est adaptée à être rapportée sur le panneau ouvrant à équiper, et, d'autre part, un volet de préhension, qui, par des moyens d'articulation, est monté pivotant sur le boîtier entre deux positions, à savoir, une position escamotée, de repos, pour laquelle il s'encastre sensiblement à plat dans le boîtier, et deux positions déployées, de service, pour lesquelles il fait au contraire au moins partiellement saillie hors de ce boîtier, cette poignée étant d'une manière générale caractérisée en ce que les moyens d'articulation du volet de préhension au boîtier comportent deux zones d'articulation distinctes, qui sont écartées l'une de l'autre, et qui interviennent alternativement de telle sorte que, lorsque l'une exerce, seule, sa fonction d'articulation, l'autre autorise l'échappement du volet de préhension pour le déploiement dudit volet dans l'une de ses deux positions de service, et en ce que lesdits moyens d'articulation sont conformés pour que le centre instantané de rotation se déplace au fur et à mesure du mouvement de déploiement du volet ; elle a encore pour objet tout coffret dont la porte est équipée d'une telle poignée.

Grâce aux deux zones d'articulation prévues suivant l'invention, le volet de préhension de cette poignée peut avantageusement être déployé suivant l'une ou l'autre de deux configurations distinctes, qui, en pratique, sont symétriques l'une de l'autre par rapport au plan médian de l'ensemble.

Il en résulte que, dans le cas d'un changement d'ouverture du sens de la porte, il est possible de retrouver les mêmes conditions d'intervention sur la poignée sans retournement de celle-ci.

Autrement dit, les qualités ergonomiques de la poignée sont avantageusement conservées, sans qu'aucune intervention ne soit nécessaire sur cette poignée.

Les opérations nécessaires au changement du sens d'ouverture de la porte s'en trouvent simplifiées.

En outre, les deux zones d'articulation prévues suivant l'invention peuvent avantageusement être suffisamment écartées l'une de l'autre pour laisser, si désiré, toute la place nécessaire à l'implantation d'une serrure.

Le boîtier de la poignée suivant l'invention comporte donc, préférentiellement, intérieurement, en attente, entre ces deux zones d'articulation, et en retrait par rapport à sa surface de façade, une platine propre à l'implantation d'une serrure.

Au repos, la serrure éventuellement mise en oeuvre demeure ainsi avantageusement cachée sous le volet de préhension.

Cette serrure intervient en outre avantageusement suivant le plan médian de l'ensemble.

A l'égard des caractéristiques précédentes, il est à souligner que, dans la demande de certificat d'utilité français No 2 716 600 déjà mentionnée ci-dessus, le volet de préhension de la poignée ne comporte qu'une zone d'articulation, suivant un axe matérialisé par deux goujons alignés l'un avec l'autre.

Il en est de même dans la demande de brevet allemand No 37 12 376, même si, dans celle-ci, il est possible de faire pivoter de part et d'autre de sa zone d'articulation le volet de préhension correspondant.

Dans le brevet allemand No 40 02 963, le volet de préhension de la poignée concernée comporte bien deux zones d'articulation, mais il ne s'agit pas de zones d'articulation distinctes, puisqu'elles interviennent simultanément, et ce volet de préhension n'est pas pivotant, puisqu'il se déplace parallèlement à lui-même.

Dans le brevet allemand No 38 18 187, il y a simplement deux volets pivotants, qui, distincts l'un de l'autre, sont actionnés simultanément par une même commande.

Le brevet américain No 4 912 951 concerne, lui, la serrure, d'ailleurs assez compliquée, d'une porte coulissante, et la poignée de cette porte n'est pas équipée d'un quelconque volet de préhension monté pivotant.

De même, le brevet américain No 3 850 464 concerne un simple verrou monté coulissant.

Quant aux demandes de brevet internationales Nos WO 93/09323 et WO 85/02647, elles concernent des portes, et non pas des poignées, qu'il s'agit simplement de pouvoir ouvrir à gauche ou à droite.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un coffret dont la porte est équipée d'une poignée suivant l'invention ;
la figure 2 est, avec un arrachement local, une vue en perspective éclatée de cette poignée, de la porte sur laquelle elle est rapportée, et du dormant sur lequel cette porte est articulée.
La figure 3 est, à échelle supérieure, une vue en perspective du boîtier de la poignée suivant l'invention, représenté isolément, et vu de l'avant ;
la figure 4 est une autre vue en perspective de ce boîtier, vu de l'arrière, suivant la flèche IV de la figure 3 ;
la figure 5 en est, à échelle encore supérieure, une vue en coupe longitudinale, suivant la ligne V-V de la figure 3 ;
la figure 6 reprend, à échelle encore supérieure, le détail de la figure 5 repéré par un encart VI sur cette figure 5 ;
la figure 7 est, à l'échelle de la figure 3, une vue en perspective du volet de préhension de la poignée suivant l'invention, représenté isolément ;
la figure 8 est, à l'échelle de la figure 5, une vue latérale de ce volet de préhension, suivant la flèche VIII de la figure 7 ;
la figure 9 reprend, à l'échelle de la figure 6, le détail de la figure 8 repéré par un encart IX sur cette figure 8 ;
la figure 10 est une vue en coupe longitudinale de la poignée suivant l'invention, pour la position escamotée, de repos, de son volet de préhension ;
la figure 11 est une vue en coupe longitudinale analogue à celle de la figure 10, pour la position déployée, de service, de ce volet de préhension ;
la figure 12 est, avec des arrachements locaux, une vue en perspective montrant également ce volet de préhension en position déployée ;
la figure 13 est une vue en perspective analogue à celle de la figure 12, lorsqu'une serrure est prévue.

Ces figures illustrent, à titre d'exemple, l'application de l'invention à un coffret 10.

Ce coffret 10 ne relevant pas, par lui-même, de la présente invention, il ne sera pas décrit dans tous ses détails ici.

Il suffira d'indiquer que, dans la forme de réalisation représentée, il s'agit d'un coffret 10 comportant, globalement, de manière connue en soi, d'une part, un corps 11, qui est par exemple destiné à être encastré dans un quelconque support, non représenté, par exemple un mur, et, d'autre part, pour la fermeture de ce corps 11, une porte 12.

Par exemple, et tel que représenté, la porte 12 est articulée à un dormant 13 par une tige 14 dont les extrémités forment gonds, et ce dormant 13 est solidaire du corps 11.

Dans la forme de réalisation représentée, le dormant 13 comporte un cadre de façade 15, par lequel il est adapté à pouvoir s'appliquer sur le support concerné, et, le long des côtés de sa périphérie interne, des bords tombés 16, par lesquels il est adapté à être solidarisé au corps 11.

Sur certains au moins de ces bords tombés 16 sont prévues, de place en place, par exemple sous le forme de crevés, des butées de porte 17 destinées à limiter la pénétration de la porte 12.

Sur l'un et l'autre des bords tombés 16 bordant les côtés verticaux du cadre de façade 15, est en outre prévue, en position médiane, une ouverture 18, qui est destinée à former une gâche, et qui, dans la forme de réalisation représentée, est allongée verticalement en boutonnière.

Dans la forme de réalisation représentée, la porte 12 est elle-même bordée par des bords tombés 20 le long de sa périphérie.

La tige 14 s'étend le long d'un des côtés verticaux de la porte 12, et, à proximité de son côté vertical opposé, la porte 12 est équipée d'une poignée 21.

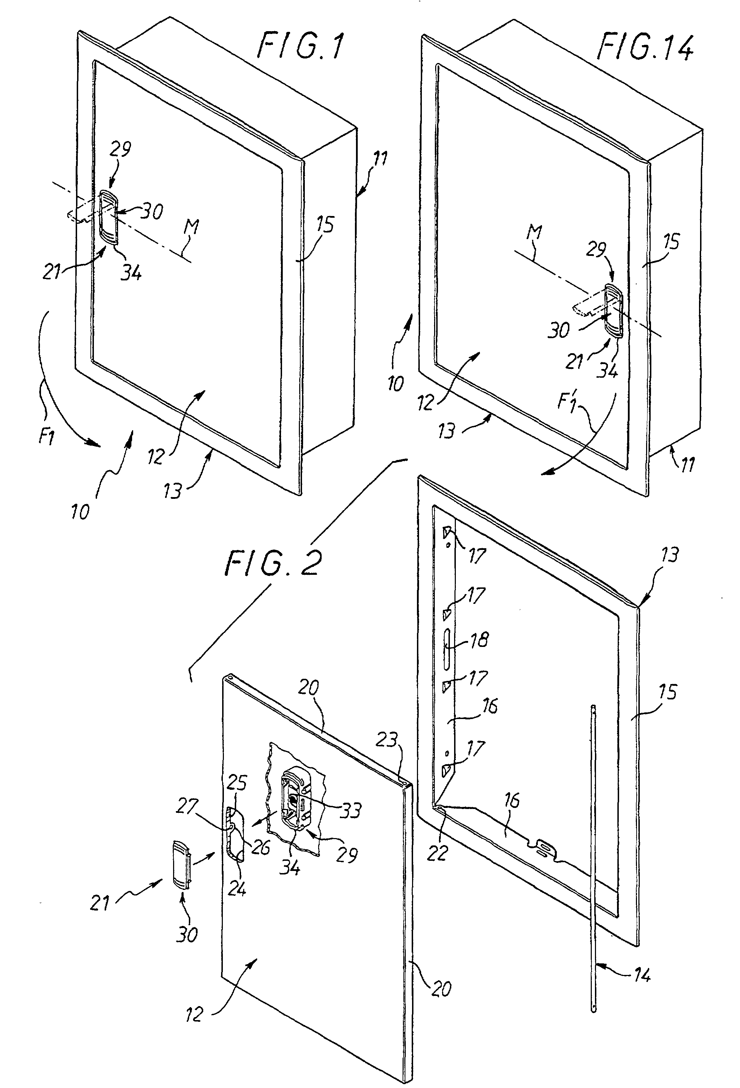

Si, comme représenté sur les figures 1 et 2, la poignée 21 est implantée à gauche, la tige 14 étant elle-même implantée à droite, l'ouverture de la porte 12 se fait de la gauche vers la droite, suivant la flèche F1 de la figure 1.

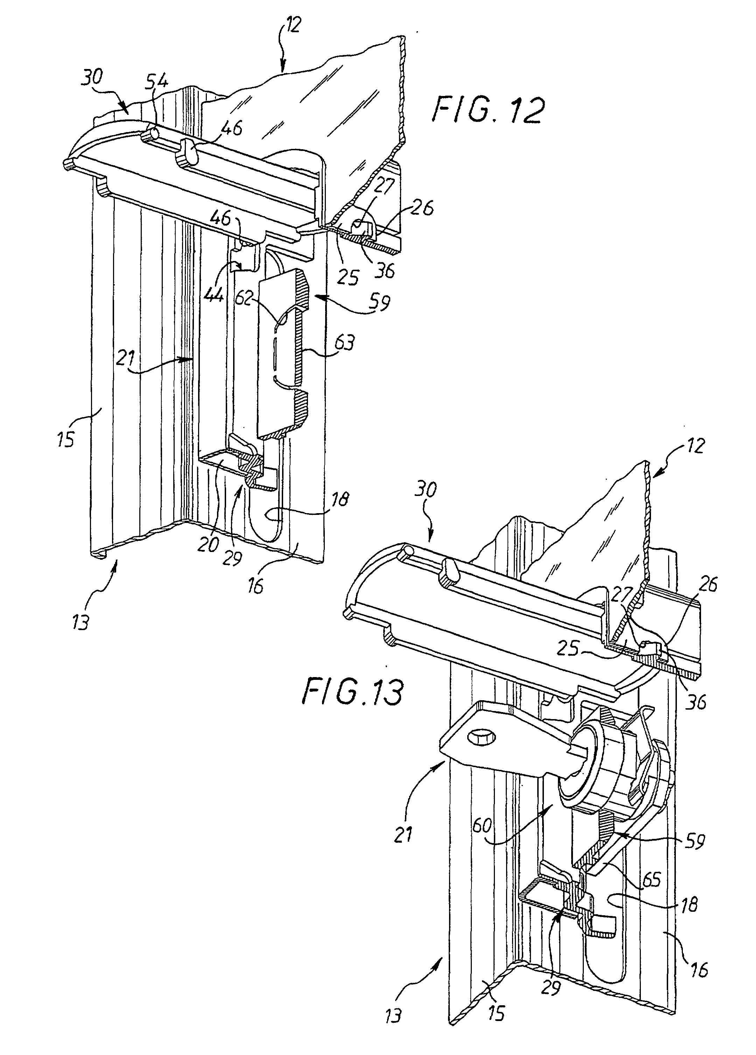

Si, en variante, la poignée 21 est implantée à droite, comme représenté sur la figure 12, la tige 14 étant alors elle-même implantée à gauche, l'ouverture de la porte 12 se fait de la droite vers la gauche, suivant la flèche F'1 de cette figure 12.

Pour l'intervention de la tige 14 d'un côté ou de l'autre, ceux des bords tombés 16 du dormant 13 qui correspondent aux côtés horizontaux de ce dormant 13 comportent un perçage 22 à chacune de leurs extrémités.

Corollairement, ceux des bords tombés 20 de la porte 12 qui correspondent aux côtés horizontaux de cette porte 12 comportent, en correspondance, un perçage 23 à celle de leurs extrémités qui est du côté opposé à la poignée 21.

Les dispositions qui précèdent étant bien connues par elles-mêmes, elles ne seront pas décrites plus en détail ici.

Pour l'implantation de la poignée 21, la porte 12 comporte, de manière connue en soi, un évidement 24.

Dans la forme de réalisation représentée, cet évidement 24 est bordé, tout au long de son contour, par un bord tombé 25, qui fait saillie vers l'intérieur, comme les bords tombés 20, et qui, de place en place, se prolonge localement par des oreilles 26 chacune ajourées d'un perçage 27.

Par exemple, il est prévu une telle oreille 26 sur l'un des côtés de l'évidement 24, en l'espèce celui le plus proche du bord libre de la porte 12, ainsi qu'il est visible sur la figure 2, et deux autres oreilles 26 sur le côté de cet évidement 24 opposé au précédent, ainsi qu'il est visible pour l'une d'elles sur les figures 12 et 13.

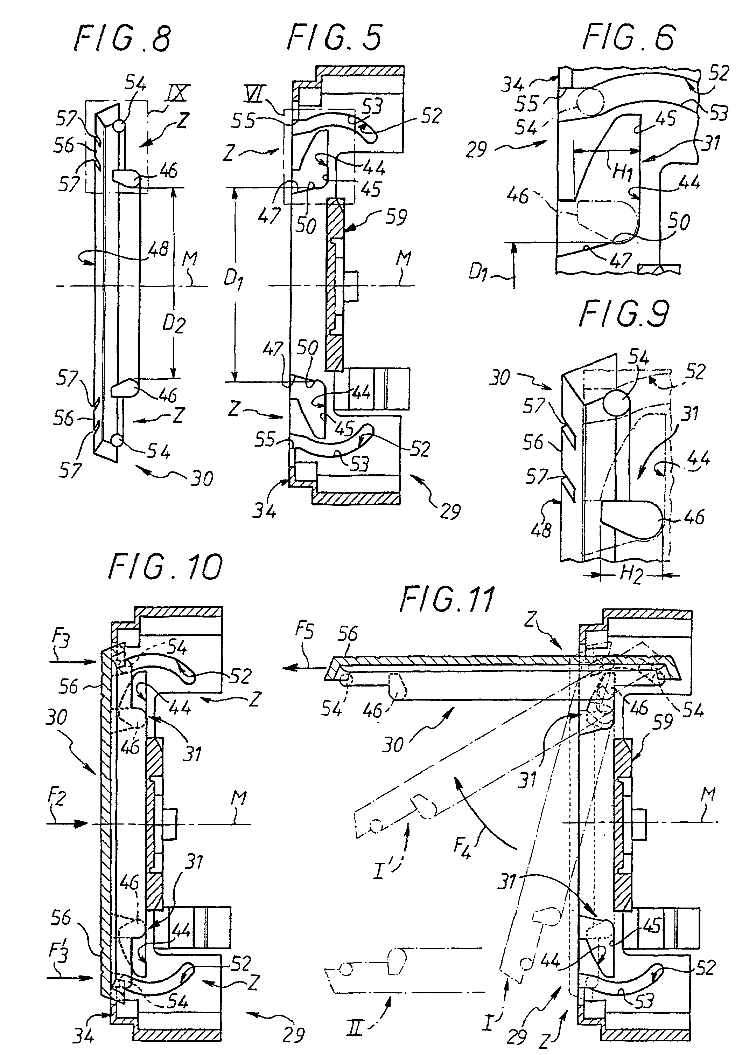

De manière également connue en soi, la poignée 21 comporte, d'une part, un boîtier 29, par lequel elle est adaptée à être rapportée sur le panneau ouvrant que constitue la porte 12, et, d'autre part, un volet de préhension 30, qui, par des moyens d'articulation 31 détaillés ultérieurement, est monté pivotant sur le boîtier 29 entre deux positions, à savoir, une position escamotée, de repos, pour laquelle, tel que représenté en traits continus sur les figures 1 et 10, il s'encastre sensiblement à plat dans le boîtier 29, et une position déployée, de service, pour laquelle, tel que représenté en traits interrompus sur les figure 1 et 12 et en traits continus sur la figure 11, il fait au contraire au moins partiellement saillie hors de ce boîtier 29.

Suivant l'invention, entre le boîtier 29 et le volet de préhension 30 sont prévues deux zones d'articulation Z distinctes, qui sont écartées l'une de l'autre, et dans chacune desquelles interviennent, suivant des modalités décrites plus en détail ultérieurement, des moyens d'articulation 31.

Le boîtier 29 est adapté à être encastré dans la porte 12, à la faveur de l'évidement 24 de celle-ci.

Dans la forme de réalisation représentée, ce boîtier 29 est en forme générale de cadre.

Il forme donc, intérieurement, par lui-même, une cavité 33, qui ouvre sur l'extérieur, et par laquelle il est adapté à recevoir à plat le volet de préhension 30, et sa surface de façade 34, c'est-à-dire la partie qui en est la seule visible à la surface de la porte 12, se réduit à sa tranche.

Extérieurement, le boîtier 29 présente, transversalement, en saillie, de place en place, en retrait par rapport à sa surface de façade 34, et parallèlement à celle-ci, des épaulements 35 par lesquels il est adapté à venir en butée contre la tranche du bord tombé 25 de l'évidement 24 de la porte 12.

Corollairement, pour son assujettissement, par encliquetage, à cette porte 12, il présente, en correspondance avec les oreilles 26 de ce bord tombé 25, des crans 36.

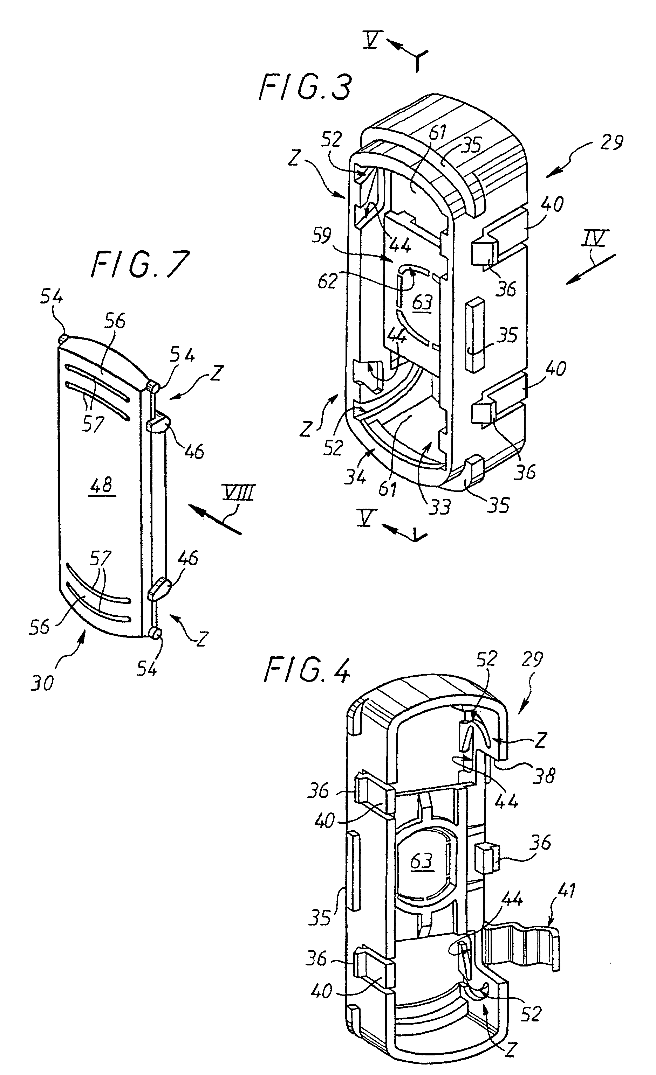

Pour l'oreille 26 unique intervenant d'un côté de l'évidement 24 de la porte 12, le cran 36 intervient lui-même dans la zone médiane d'une échancrure 38, figure 4.

Pour les deux oreilles 26 intervenant du côté opposé, les deux crans 36 sont chacun respectivement portés par deux pattes élastiquement déformables 40, pour faciliter le montage du boîtier 29 sur la porte 12.

En outre, dans la forme de réalisation représentée, pour éviter à ce niveau toute pénétration d'un corps étranger dans le coffret 10, le boîtier 29 s'étend à pleine hauteur entre les pattes élastiquement déformables 40.

Dans la forme de réalisation représentée, le boîtier 29 comporte, extérieurement, en saillie, du côté le plus proche du bord libre de la porte 12, et, donc, du même côté que son échancrure 38, une patte 41 qui, conformée en escalier, et formant ainsi un crochet, est propre à coopérer en encliquetage avec le dormant 13, à la faveur de l'ouverture 18 du bord tombé 16 correspondant de celui-ci, pour le maintien en position de fermeture de la porte 12, figures 12 et 13.

Dans la forme de réalisation représentée, le boîtier 29 et le volet de préhension 30 ont, en plan, des contours complémentaires, qui sont allongés perpendiculairement à un plan médian M commun à l'ensemble, et pour lesquels ce plan médian M est aussi un plan de symétrie.

Plus précisément, ces contours sont globalement rectangulaires, avec des côtés longitudinaux qui, sensiblement rectilignes, s'étendent parallèlement aux côtés verticaux de la porte 12, et des côtés transversaux qui, légèrement cintrés, s'étendent globalement parallèlement aux côtés horizontaux de cette porte 12.

Bien entendu l'évidement 24 de la porte 12 a lui-même un contour complémentaire de celui du boîtier 29.

Le plan médian M commun à l'ensemble est schématisé par sa trace sur les figures 1, 5, 8, 10, 11 et 12.

Eu égard à la répartition particulière des crans 36 et à la patte 41, ce plan médian M ne constitue pas, en toute rigueur, un plan de symétrie pour le boîtier 29.

Par contre, il constitue un plan de symétrie pour le volet de préhension 30.

En outre, il se confond avec le plan horizontal médian correspondant de la porte 12, qui est aussi un plan de symétrie pour celle-ci.

Autrement dit, la poignée 21 s'étend sensiblement de manière symétrique de part et d'autre d'un plan horizontal passant par le centre de la porte 12.

Dans la forme de réalisation représentée, les deux zones d'articulation Z prévues entre le boîtier 29 et le volet de préhension 30 sont identiques l'une à l'autre, et elles sont symétriques l'une de l'autre par rapport au plan médian M.

Dans la forme de réalisation représentée, ces deux zones d'articulation Z s'étendent chacune respectivement au voisinage des extrémités du boîtier 29 et du volet de préhension 30.

Pour l'une au moins de ces deux zones d'articulation Z, et, en pratique, pour chacune de celles-ci, les moyens d'articulation 31 comportent, d'une part, en creux sur chacun de deux côtés opposés du boîtier 29, en l'espèce ses côtés longitudinaux, une rainure de pivotement et de retenue 44, dont un tronçon 45, au moins, est globalement droit, en s'étendant sensiblement parallèlement à la surface de façade 34 de ce boîtier 29, et, d'autre part, en saillie sur chacun des deux côtés correspondants du volet de préhension 30, un ergot de pivotement et de retenue 46, par lequel ce volet de préhension 30 est en prise avec la rainure de pivotement et de retenue 44 du boîtier 29.

Les diverses rainures de pivotement et de retenue 44 que présente ainsi le boîtier 29 débouchent chacune sur la surface de façade 34 de celui-ci par un tronçon d'engagement 47, qui, préférentiellement, et tel que représenté, va en s'évasant vers l'extérieur.

Globalement, ce tronçon d'engagement 47 s'étend sensiblement en équerre par rapport au tronçon droit 45 auquel il donne accès.

Pour un même côté du boîtier 29, les tronçons droits 45 des rainures de pivotement et de retenue 44 s'étendent globalement dos à dos l'un par rapport à l'autre, en direction, chacun respectivement, des extrémités correspondantes de ce boîtier 29.

Dans la forme de réalisation représentée, les deux flancs du tronçon droit 45 des rainures de pivotement et de retenue 44 convergent l'un vers l'autre de l'une à l'autre des extrémités de ce tronçon droit 45, c'est-à-dire de l'extrémité, ouverte, ou extrémité d'entrée, par laquelle ce tronçon droit 45 communique avec le tronçon d'engagement 47 auquel il fait suite, à l'autre extrémité de ce tronçon droit 45, qui, en pratique, est, elle, une extrémité borgne.

Plus précisément, celui de ces flancs qui est le plus éloigné de la surface de façade 34 du boîtier 29 s'étend sensiblement parallèlement à cette surface de façade 34, tandis que l'autre s'étend globalement en oblique par rapport à cette dernière.

Conjointement, les ergots de pivotement et de retenue 46 du volet de préhension 30 ont en section transversale un contour qui est au moins en partie en forme de coin.

Plus précisément, dans la forme de réalisation représentée, le contour de ces ergots de pivotement et de retenue 46 est formé d'un demi-cercle accolé à un trapèze droit par la grande base de celui-ci.

Les ergots de pivotement et de retenue 46 s'étendent globalement perpendiculairement à la surface de façade 48 du volet de préhension 30, et le demi-cercle de leur contour forme la partie de ce contour la plus éloignée de cette surface de façade 48.

La hauteur H2 de ces ergots de pivotement et de retenue 46, mesurée perpendiculairement à la surface de façade 48 du volet de préhension 30, est bien entendu faite légèrement inférieure à la hauteur H1 de l'extrémité ouverte, d'entrée, du tronçon droit 45 des rainures de pivotement et de retenue 44 du boîtier 29.

Préférentiellement, l'une au moins des rainures de pivotement et de retenue 44 du boîtier 29, et, dans la forme de réalisation représentée, chacune de celles-ci, comporte, en saillie sur l'un au moins de ses flancs, un bossage de maintien 50 propre à un encliquetage de l'ergot de pivotement et de retenue 46 correspondant du volet de préhension 30.

Dans la forme de réalisation représentée, ce bossage de maintien 50 intervient sensiblement au raccordement du tronçon d'engagement 47 de ces rainures de pivotement et de retenue 44 avec leur tronçon droit 45, sur celui des flancs du tronçon d'engagement 47 qui est le plus proche du plan médian M.

Soit D1 la distance séparant l'un de l'autre les deux bossages de maintien 50 intervenant d'un même côté du boîtier 29, et soit D2 la distance séparant l'un de l'autre les deux ergots de pivotement et de retenue 46 correspondants du volet de préhension 30.

La distance D1 est légèrement supérieure à la distance D2.

Dans la forme de réalisation représentée, les moyens d'articulation 31 comportent, en outre, en sus des rainures de pivotement et de retenue 44 et des ergots de pivotement et de retenue 46, pour l'une au moins des zones d'articulation Z, et, en pratique, pour chacune de celles-ci, d'une part, en creux, sur chacun des deux côtés concernés du boîtier 29, une rainure de guidage 52, dont un tronçon 53, au moins, est globalement cintré, en s'étendant sensiblement orthogonalement par rapport à la surface de façade 34 de ce boîtier 29, et, d'autre part, en saillie sur chacun des deux côtés correspondants du volet de préhension 30, un ergot de guidage 54, par lequel ce volet de préhension 30 est en prise avec la rainure de guidage 52 du boîtier 29.

Préférentiellement, et cela est le cas dans la forme de réalisation représentée, les diverses rainures de guidage 52 que présente ainsi le boîtier 29 débouchent chacune sur la surface de façade 34 de ce boîtier 29 par un tronçon d'engagement 55 qui va en s'évasant vers l'extérieur.

En pratique, ces rainures de guidage 52 s'étendent au-delà des rainures de pivotement et de retenue 44 par rapport au plan médian M.

Autrement dit, elles s'étendent entre les rainures de pivotement et de retenue 44 et les extrémités concernées du boîtier 29, et le tronçon droit 45 de ces rainures de pivotement et de retenue 44 est dirigé vers elles.

Corollairement, le tronçon cintré 53 des rainures de guidage 52 s'étend suivant un arc courbe, par exemple un arc de cercle, dont la concavité est tournée vers le plan médian M.

Quant aux ergots de guidage 54 correspondants du volet de préhension 30, ils ont, en section transversale, dans la forme de réalisation représentée, un contour circulaire.

Ces ergots de guidage 54 sont relativement proches des extrémités du volet de préhension 30, tandis que les ergots de pivotement et de retenue 46 sont en retrait par rapport à celles-ci.

Entre les ergots de guidage 54 et les ergots de pivotement et de retenue 46, le volet de préhension 30 forme donc, ses extrémités, deux touches d'enfoncement 56 et, pour matérialiser celles-ci, il présente, en creux sur sa surface de façade 48, au voisinage de chacune de ces extrémités, une ou plusieurs rainures 57.

Par rapport à la surface de façade 48 du volet de préhension 30, les ergots de guidage 54 s'étendent sensiblement au même niveau que le trapèze droit du contour des ergots de pivotement et de retenue 46.

Ils sont donc en retrait par rapport au demi-cercle du contour de ces ergots de pivotement et de retenue 46.

Enfin, dans la forme de réalisation représentée, le boîtier 29 comporte, intérieurement, en attente, en retrait par rapport à sa surface de façade 34, entre les deux zones d'articulation Z, une platine 59 propre à l'implantation d'une serrure 60.

Cette platine 59 s'étend transversalement de l'un à l'autre des deux côtés longitudinaux du boîtier 29, en laissant libre, à chacune des extrémités de celui-ci, et, donc, à chacune des extrémités de la cavité 33 qu'il forme, un évidement 61 propre à une pénétration partielle du volet de préhension 30, à la faveur des rainures de guidage 52 correspondantes de ce boîtier 29.

Dans la forme de réalisation représentée, pour l'implantation d'une serrure 60, la platine 59 du boîtier 29 comporte une ouverture 62 occultée par un opercule défonçable 63.

Grâce au tronçon d'engagement 47 des rainures de pivotement et de retenue 44 du boîtier 29 et au tronçon d'engagement 55 des rainures de guidage 52 de celui-ci, la mise en place du volet de préhension 30 sur le boîtier 29 se fait très simplement de l'avant, suivant la flèche F2 de la figure 10, par simple engagement de ce volet de préhension 30 dans ce boîtier 29.

L'engagement correspondant est poursuivi jusqu'à ce que les ergots de pivotement et de retenue 46 du volet de préhension 30 butent contre celui des flancs du tronçon droit 45 des rainures de guidage et de pivotement 44 du boîtier 29 qui est le plus éloigné de la surface de façade 34 de ce boîtier 29.

Les ergots de pivotement et de retenue 46 de ce volet de préhension 30 s'étendent alors sensiblement au droit de l'extrémité ouverte, d'entrée, du tronçon droit 45 des rainures de pivotement et de retenue 44 du boîtier 29, avec le demi-cercle de leur contour disposé au-delà des bossages de maintien 50 par rapport à la surface de façade 34 de ce boîtier 29.

Eu égard aux dispositions dimensionnelles précisées ci-dessus, les ergots de pivotement et de retenue 46 assurent donc, conjointement avec les bossages de maintien 50, l'encliquetage du volet de préhension 30 sur le boîtier 29, et, donc, le maintien en place de ce volet de préhension 30 sur ce boîtier 29.

Conjointement, les ergots de guidage 54 du volet de préhension 30 s'étendent au droit de l'extrémité ouverte, d'entrée, des rainures de guidage 52 du boîtier 29.

Au repos, et tel que représenté sur la figure 10, le volet de préhension 30 s'étend ainsi à plat dans le boîtier 29, en ne faisant que très légèrement saillie sur la surface de façade 34 de celui-ci.

On supposera tout d'abord que, tel que schématisé par la flèche F3 sur la figure 10, il est exercé une action de poussée sur l'une des touches d'enfoncement 56 que forme le volet de préhension 30 à ses extrémités, et, par exemple, et tel que représenté, sur la touche d'enfoncement 56 que ce volet de préhension 30 forme à son extrémité supérieure.

Par basculement autour de l'ergot de pivotement et de retenue 46 correspondant, cette touche d'enfoncement 56 s'enfonce alors progressivement dans le boîtier 29, cependant que, suivant la flèche F4 de la figure 11, la partie subsistante du volet de préhension 30 fait progressivement saillie hors de ce boîtier 29, tel que schématisé en traits interrompus I et l' sur la figure 11.

Ainsi qu'il est aisé de le comprendre, les ergots de pivotement et de retenue 46 et les ergots de guidage 54 portés par cette partie subsistante du volet de préhension 30 échappent alors aux rainures de pivotement et de retenue 44 et aux rainures de guidage 52 correspondantes du boîtier 29 à la faveur des tronçons d'engagement 47 et 55 de celles-ci.

Dès le début du mouvement de déploiement que connaît ainsi le volet de préhension 30, les ergots de pivotement et de retenue 46 par lesquels il est encore en prise avec le boîtier 29 basculent autour du demi-cercle de leur contour, ce qui les conduit à s'engager dans le tronçon droit 45 des rainures de pivotement et de retenue 44 correspondantes du boîtier 29.

Corollairement, les ergots de guidage 54 du volet de préhension 30 par lesquels celui-ci est également encore en prise avec le boîtier 29 s'engagent eux-mêmes dans le tronçon cintré 53 des rainures de guidage 52 correspondantes de ce boîtier 29.

Du déplacement imposé au volet de préhension 30 par ces rainures de guidage 52, il résulte que, tout en poursuivant leur mouvement de basculement, les ergots de pivotement et de retenue 46 de ce volet de préhension 30 s'engagent progressivement encore plus profondément dans le tronçon droit 45 des rainures de pivotement et de retenue 44 correspondantes du boîtier 29.

Ainsi, dès le début du mouvement de déploiement du volet de préhension 30, la retenue de ce volet de préhension 30 par rapport au boîtier 29 est assurée par ses ergots de pivotement et de retenue 46.

Globalement, le mouvement de déploiement du volet de préhension 30 résulte de la combinaison de deux mouvements, qui correspondent, l'un, à celui de ses ergots de guidage 54, et, l'autre, à celui de ses ergots de pivotement et de retenue 46, et dont il résulte une rotation artificielle autour d'un centre instantané de rotation qui se déplace lui-même au fur et à mesure de ce mouvement de déploiement.

Au terme de ce mouvement de déploiement, le volet de préhension 30 s'étend sensiblement perpendiculairement au boîtier 29, c'est-à-dire sensiblement perpendiculairement à la surface de façade 34 de celui-ci.

Ses ergots de pivotement et de retenue 46 sont alors coincés au fond de l'extrémité borgne du tronçon droit 45 des rainures de pivotement et de retenue 44 du boîtier 29, ce qui affermit son maintien sur ce dernier.

Le volet de préhension 30 peut dès lors faire l'objet d'une traction, suivant la flèche F5 de la figure 11, sans risquer de se désolidariser du boîtier 29.

Il permet donc en toute sécurité l'ouverture de la porte 12.

Après fermeture de cette porte 12, le volet de préhension 30 peut être ramené à sa position initiale, suivant un processus inverse du précédent.

Si, à l'ouverture de la porte 12, il est exercé une action de poussée non plus sur la touche d'enfoncement 56 présente à l'extrémité supérieure du volet de préhension 30 mais, suivant la flèche F'3 de la figure 10, sur la touche d'enfoncement 56 présente à l'extrémité inférieure de celui-ci, le volet de préhension 30 se déploie suivant une processus du même type que le précédent, mais en faisant alors saillie à la partie inférieure du boîtier 29, tel que schématisé en traits interrompus II sur la figure 11.

Par suite, si la porte 12 fait l'objet d'un retournement de 180° dans son plan pour changer de sens d'ouverture, les conditions d'intervention sur la poignée 21 se trouvent conservées, par simple inversion des touches d'enfoncement 56 sur lesquelles il convient d'agir en poussée pour obtenir le déploiement de son volet de préhension 30.

Dans la forme de mise en oeuvre représentée sur la figure 13, une serrure 60 se trouve effectivement implantée dans le boîtier 29 de la poignée 21.

Au repos, c'est-à-dire lorsque le volet de préhension 30 de cette poignée 21 est en position escamotée, cette serrure 60 est avantageusement invisible.

Son pêne 65 coopère avec l'ouverture 18 formant gâche du dormant 13.

En outre, le domaine d'application de l'invention ne se limite pas à l'équipement de la porte d'un coffret du type de celui plus particulièrement décrit et représenté, mais s'étend aussi bien à l'équipement de n'importe quel autre type de panneau ouvrant, et, en particulier, à celui d'un couvercle.

## Revendications

1. Poignée pour panneau ouvrant, du genre comportant, d'une part, un boîtier (29), par lequel elle est adaptée à être rapportée sur le panneau ouvrant (12) à équiper, et, d'autre part, un volet de préhension (30), qui, par des moyens d'articulation (31), est monté pivotant sur le boîtier (29) entre deux positions, à savoir, une position escamotée, de repos, pour laquelle il s'encastre sensiblement à plat dans le boîtier (29), et deux positions déployées, de service, pour lesquelles il fait au contraire au moins partiellement saillie hors de ce boîtier (29), **caractérisée en ce que** les moyens d'articulation (31) du volet de préhension (30) au boîtier (29) comportent deux zones d'articulation (Z) distinctes, qui sont écartées l'une de l'autre et qui interviennent alternativement de telle sorte que, lorsque l'une exerce, seule, sa fonction d'articulation, l'autre autorise l'échappement du volet de préhension pour le déploiement dudit volet dans l'une de ses deux positions de service, et **en ce que** lesdits moyens d'articulation (31) sont conformés pour que le centre instantané de rotation se déplace au fur et à mesure du mouvement de déploiement du volet.

2. Poignée suivant la revendication 1, **caractérisée en ce que**, pour l'une au moins des deux zones d'articulation (Z), les moyens d'articulation (31) comportent, d'une part, en creux sur chacun de deux côtés opposés du boîtier (29), une rainure de pivotement et de retenue (44), dont un tronçon (45), au moins, est globalement droit, en s'étendant sensiblement parallèlement à la surface de façade (34) de ce boîtier (29), et, d'autre part, en saillie sur chacun des deux côtés correspondants du volet de préhension (30), un ergot de pivotement et de retenue (46), par lequel ce volet de préhension (30) est en prise avec la rainure de pivotement et de retenue (44) du boîtier (29).

3. Poignée suivant la revendication 2, **caractérisée en ce que** les rainures de pivotement et de retenue (44) du boîtier (29) débouchent chacune sur la surface de façade (34) de celui-ci par un tronçon d'engagement (47) qui va en s'évasant vers l'extérieur.

4. Poignée suivant la revendication 3, **caractérisée en ce que** le tronçon d'engagement (47) des rainures de pivotement et de retenue (44) du boîtier (29) s'étend sensiblement en équerre par rapport à leur tronçon droit (45).

5. Poignée suivant l'une quelconque des revendications 2 à 4, **caractérisée en ce que**, pour un même côté du boîtier (29), les tronçons droits (45) des rainures de pivotement et de retenue (44) s'étendent globalement dos à dos l'un par rapport à l'autre.

6. Poignée suivant l'une quelconque des revendications 2 à 5, **caractérisée en ce que** les deux flancs du tronçon droit (45) des rainures de pivotement et de retenue (44) du boîtier (29) convergent l'un vers l'autre de l'une à l'autre des extrémités de ce tronçon droit (45), et, conjointement, les ergots de pivotement et de retenue (46) du volet de préhension (30) ont en section transversale un contour qui est au moins en partie en forme de coin.

7. Poignée suivant la revendication 6, **caractérisée en ce que** les ergots de pivotement et de retenue (46) du volet de préhension (30) ont en section transversale un contour formé d'un demi-cercle accolé à un trapèze droit par la grande base de celui-ci.

8. Poignée de retenue suivant l'une quelconque des revendications 2 à 7, **caractérisée en ce que** l'une au moins des rainures de pivotement et de retenue (44) du boîtier (29) comporte, en saillie sur l'un au moins de ses flancs, un bossage de maintien (50) propre à un encliquetage de l'ergot de pivotement et de retenue (46) correspondant du volet de préhension (30).

9. Poignée suivant la revendication 8, **caractérisée en ce que** le bossage de maintien (50) intervient sensiblement au raccordement du tronçon d'engagement (47) avec le tronçon droit (45).

10. Poignée suivant l'une quelconque des revendications 2 à 9, **caractérisée en ce que**, pour l'une au moins des zones d'articulation (Z), les moyens d'articulation (31) comportent, en outre, d'une part, en creux, sur chacun des deux côtés concernés du boîtier (29), une rainure de guidage (52), dont un tronçon (53), au moins, est globalement cintré, en s'étendant sensiblement orthogonalement par rapport à la surface de façade (34) de ce boîtier (29), et, d'autre part, en saillie sur chacun des deux côtés correspondants du volet de préhension (30), un ergot de guidage (54), par lequel ce volet de préhension (30) est en prise avec la rainure de guidage (52) du boîtier (29).

11. Poignée suivant la revendication 10, **caractérisée en ce que** les rainures de guidage (52) du boîtier (29) débouchent chacune sur la surface de façade (34) de celui-ci par un tronçon d'engagement (55) qui va en s'évasant vers l'extérieur.

12. Poignée suivant l'une quelconque des revendications 10, 11, **caractérisée en ce que** le tronçon cintré (53) des rainures de guidage (52) du boîtier (29) s'étend suivant un arc courbe dont la concavité est tournée vers le plan médian (M) de l'ensemble.

13. Poignée suivant l'une quelconque des revendications 10 à 12, **caractérisée en ce que** les ergots de guidage (54) du volet de préhension (30) ont en section transversale un contour circulaire.

14. Poignée suivant l'une quelconque des revendications 10 à 13, **caractérisée en ce que** les rainures de guidage (52) du boîtier (29) s'étendent au-delà des rainures de pivotement et de retenue (44) par rapport au plan médian (M) de l'ensemble.

15. Poignée suivant l'une quelconque des revendications 1 à 14, **caractérisée en ce que** les deux zones d'articulation (Z) sont identiques l'une à l'autre et symétriques l'une à l'autre par rapport au plan médian (M) de l'ensemble.

16. Poignée suivant la revendication 15, **caractérisée en ce que**, en plan, le boîtier (29) et le volet de préhension (30) ont des contours complémentaires, qui sont allongés sensiblement perpendiculairement au plan médian (M) de l'ensemble, et pour lesquels ce plan médian (M) est aussi un plan de symétrie.

17. Poignée suivant la revendication 16, **caractérisée en ce que** les zones d'articulation (Z) s'étendent chacune respectivement au voisinage des extrémités du boîtier (29) et du volet de préhension (30).

18. Poignée suivant l'une quelconque des revendications 1 à 17, **caractérisée en ce que**, entre les deux zones d'articulation (Z), le boîtier (29) comporte, intérieurement, en retrait par rapport à sa surface de façade (34), une platine (59) propre à l'implantation d'une serrure (60).

19. Poignée suivant la revendication 18, **caractérisée en ce que**, pour l'implantation d'une serrure (60), la platine (59) du boîtier (29) comporte une ouverture (62) occultée par un opercule défonçable (63).

20. Poignée suivant l'une quelconque des revendications 1 à 19, **caractérisée en ce que** le boîtier (29) comporte, extérieurement, en saillie sur l'un de ses côtés, une patte (41) propre à coopérer en encliquetage avec le dormant (13) sur lequel est monté le panneau ouvrant (12) concerné.

21. Coffret du genre comportant une porte (12), **caractérisé en ce que** cette porte (12) est équipée d'une poignée (21) conforme à l'une quelconque des revendications 1 à 20.

## Claims

1. A handle for an openable panel, of the kind comprising on the one hand a casing (29), by way of which it is adapted to be fitted to the openable panel (12) to be equipped therewith and on the other hand a gripping flap (30) which by pivot means (31) is mounted pivotably on the casing (29) between two positions, namely a retracted rest position in which it is received substantially flat in the casing (29) and two deployed operative positions in which in contrast it at least partially projects from the casing (29), **characterised in that** the pivot means (31) for pivotably mounting the gripping flap (30) to the casing (29) comprise two distinct pivot zones (Z) which are spaced from each other and which come into operation alternately in such a way that when one alone performs its pivot function the other permits the gripping flap to escape for deployment of said flap in one of its two operative positions, and that said pivot means (31) are so shaped that the instantaneous centre of rotation is displaced in proportion to the deployment movement of the flap.

2. A handle according to claim 1 **characterised in that**, for one at least of the two pivot zones (Z), the pivot means (31) comprise on the one hand in recessed relationship on each of the two opposite sides of the casing (29), a pivot and retaining groove (44) of which a portion (45) at least is generally straight, extending in substantially parallel relationship with the front surface (34) of said casing (29), and, on the other hand, in projecting relationship on each of the two corresponding sides of the gripping flap (30), a pivot and retaining lug (46) by way of which said gripping flap (30) is engaged with the pivot and retaining groove (44) of the casing (29).

3. A handle according to claim 2 **characterised in that** the pivot and retaining grooves (44) of the casing (29) each open on to the front surface (34) thereof by way of an engagement portion (47) which extends in a flaring configuration towards the exterior.

4. A handle according to claim 3 **characterised in that** the engagement portion (47) of the pivot and retaining grooves (44) of the casing (29) extends substantially at a right angle with respect to their straight portion (45).

5. A handle according to any one of claims 2 to 4 **characterised in that**, for the same side of the casing (29), the straight portions (45) of the pivot and retaining grooves (44) extend generally in mutually back-to-back relationship.

6. A handle according to any one of claims 2 to 5 **characterised in that** the two flanks of the straight portion (45) of the pivot and retaining grooves (44) of the casing (29) converge towards each other from one of the ends of said straight portion (45) to the other and conjointly the pivot and retaining lugs (46) of the gripping flap (30) are in cross-section of a contour which at least in part is wedge-shaped.

7. A handle according to claim 6 **characterised in that** the pivot and retaining lugs (46) of the gripping flap (30) are in cross-section of a contour formed by a semicircle joined to a right trapezium by the large base thereof.

8. A retaining handle according to any one of claims 2 to 7 **characterised in that** one at least of the pivot and retaining grooves (44) of the casing (29) comprises in projecting relationship on one at least of its flanks a holding boss (50) for latching engagement of the corresponding pivot and retaining lug (46) of the gripping flap (30).

9. A handle according to claim 8 **characterised in that** the holding boss (50) is operatively disposed substantially at the connection of the engagement portion (47) to the straight portion (45).

10. A handle according to any one of claims 2 to 9 **characterised in that**, for one at least of the pivot zones (Z), the pivot means (31) further comprise on the one hand in recessed relationship on each of the two sides in question of the casing (29) a guide groove (52) of which a portion (53) at least is generally curved, extending substantially orthogonally with respect to the front surface (34) of said casing (29) and on the other hand in projecting relationship on each of the two corresponding sides of the gripping flap (30) a guide lug (54) by way of which said gripping flap (30) is in engagement with the guide groove (52) of the casing (29).

11. A handle according to claim 10 **characterised in that** the guide grooves (52) of the casing (29) each open on to the front surface (34) thereof by way of an engagement portion (55) which extends in a flaring configuration towards the exterior.

12. A handle according to either one of claims 10 and 11 **characterised in that** the curved portion (53) of the guide grooves (52) of the casing (29) extends along a curved arc, the concavity of which faces towards the central plane (M) of the assembly.

13. A handle according to any one of claims 10 to 12 **characterised in that** the guide lugs (54) of the gripping flap (30) are of a circular contour in cross-section.

14. A handle according to any one of claims 10 to 13 **characterised in that** the guide grooves (52) of the casing (29) extend beyond the pivot and retaining grooves (44) with respect to the central plane (M) of the assembly.

15. A handle according to any one of claims 1 to 14 **characterised in that** the two pivot zones (Z) are identical to each other and symmetrical relative to each other with respect to the central plane (M) of the assembly.

16. A handle according to claim 15 **characterised in that** in plan the casing (29) and the gripping flap (30) are of complementary contours which are elongate substantially perpendicularly to the central plane (M) of the assembly and in respect of which said central plane (M) is also a plane of symmetry.

17. A handle according to claim 16 **characterised in that** the pivot zones (Z) each extend respectively in the vicinity of the ends of the casing (29) and the gripping flap (30).

18. A handle according to any one of claims 1 to 17 **characterised in that**, between the two pivot zones (Z), the casing (29) comprises internally and in set-back relationship with respect to its front surface (34) a plate (59) for the installation of a lock (60).

19. A handle according to claim 18 **characterised in that**, for the installation of a lock (20), the plate (59) of the casing (29) comprises an opening (62) which is closed off by a knock-out cover (63).

20. A handle according to any one of claims 1 to 19 **characterised in that** the casing (29) comprises externally in projecting relationship on one of its sides a tongue (41) capable of latching co-operation with the frame (13) on which the openable panel (12) in question is mounted.

21. A box of the kind comprising a door (12) **characterised in that** said door (12) is equipped with a handle (21) according to any one of claims 1 to 20.

## Patentansprüche

1. Griff für einen öffnenden Flügel, der einerseits ein Gehäuse (29) aufweist, mit dem er an dem zu bestückenden Flügel (12) angebracht werden kann, und andererseits eine Greifklappe (30), die über Gelenkmittel (31) an dem Gehäuse (29) zwischen zwei Stellungen schwenkbar montiert ist, und zwar zwischen einer versenkten Ruhestellung, in der sie in das Gehäuse (29) im wesentlichen flach eingelassen ist, und zwei ausgeklappten Betriebsstellungen, in denen sie mindestens teilweise an dem Gehäuse (29) vorsteht, **dadurch gekennzeichnet, dass** die Gelenkmittel (31) zum Anlenken der Greifklappe (30) am Gehäuse (29) zwei getrennte Gelenkbereiche (Z) umfassen, die voneinander entfernt sind und abwechselnd so wirken, dass, wenn einer allein seine Gelenkfunktion erfüllt, der andere das Austreten der Greifklappe zum Ausklappen dieser Klappe in eine ihrer beiden Betriebsstellungen zulässt, und dass die Gelenkmittel (31) so ausgebildet sind, dass der momentane Drehpunkt sich im Maße der Ausklappbewegung der Klappe verlagert.

2. Griff nach Anspruch 1, **dadurch gekennzeichnet, dass** die Gelenkmittel (31) mindestens bei einem der beiden Gelenkbereiche (Z) einerseits auf jeder der beiden einander entgegengesetzten Seiten des Gehäuses (29) eine Schwenk- und Rückhaltenut (44), von der zumindest ein Abschnitt (45) im wesentlichen gerade ist und sich im wesentlichen parallel zu der Frontfläche (34) des Gehäuses (29) erstreckt, und andererseits auf jeder der beiden entsprechenden Seiten der Greifklappe (30) vorstehend eine Schwenk- und Rückhaltenase (46) umfassen, über die diese Greifklappe (30) mit der Schwenk- und Rückhaltenut (44) des Gehäuses (29) in Eingriff steht.

3. Griff nach Anspruch 2, **dadurch gekennzeichnet, dass** die Schwenk- und Rückhaltenuten (44) des Gehäuses (29) jeweils an dessen Frontfläche (34) über einen sich nach außen ausweitenden Einführungsabschnitt (47) ausmünden.

4. Griff nach Anspruch 3, **dadurch gekennzeichnet, dass** der Einführungsabschnitt (47) der Schwenk- und Rückhaltenuten (44) des Gehäuses (29) sich zu ihrem geraden Abschnitt (45) im wesentlichen rechtwinklig erstreckt.

5. Griff nach einem der Ansprüche 2 bis 4, **dadurch gekennzeichnet, dass** die geraden Abschnitte (45) der Schwenk- und Rückhaltenuten (44) sich auf einer gemeinsamen Seite des Gehäuses (29) im wesentlichen zueinander Rücken an Rücken erstrecken.

6. Griff nach einem der Ansprüche 2 bis 5, **dadurch gekennzeichnet, dass** die beiden Flanken des geraden Abschnitts (45) der Schwenk- und Rückhaltenuten (44) des Gehäuses (29) von einem Ende dieses geraden Abschnitts (45) zum anderen aufeinander zu konvergieren und die Schwenk- und Rückhaltenasen (46) der Greifklappe (30) gleichzeitig im Querschnitt einen Umriss besitzen, der mindestens teilweise keilförmig ist.

7. Griff nach Anspruch 6, **dadurch gekennzeichnet, dass** die Schwenk- und Rückhaltenasen (46) der Greifklappe (30) im Querschnitt einen Umriss besitzen, der aus einem Halbkreis besteht, der an die große Basis eines rechtwinkligen Trapezes angesetzt ist.

8. Griff nach einem der Ansprüche 2 bis 7, **dadurch gekennzeichnet, dass** mindestens eine der Schwenk- und Rückhaltenuten (44) des Gehäuses (29) auf mindestens einer ihrer Flanken vorstehend einen Haltevorsprung (50) aufweist, der für ein Einklinken der entsprechenden Schwenk- und Rückhaltenase (46) der Greifklappe (30) geeignet ist.

9. Griff nach Anspruch 8, **dadurch gekennzeichnet, dass** der Haltevorsprung (50) im wesentlichen am Anschluss des Einführungsabschnitts (47) an den geraden Abschnitt (45) vorgesehen ist.

10. Griff nach einem der Ansprüche 2 bis 9, **dadurch gekennzeichnet, dass** die Gelenkmittel (31) mindestens bei einem der Gelenkbereiche (Z) außerdem einerseits auf jeder der betreffenden Seiten des Gehäuses (29) eine Führungsnut (52) umfassen, von der mindestens ein Abschnitt (53) im wesentlichen gekrümmt ist und sich zur Frontfläche (34) des Gehäuses (29) im wesentlichen rechtwinklig erstreckt, und andererseits auf jeder der beiden entsprechenden Seiten der Greifklappe (30) vorstehend eine Führungsnase (54), über die die Greifklappe (30) mit der Führungsnut (52) des Gehäuses (29) in Eingriff steht.

11. Griff nach Anspruch 10, **dadurch gekennzeichnet, dass** die Führungsnuten (52) des Gehäuses (29) jeweils an dessen Frontfläche (34) über einen sich nach außen ausweitenden Einführungsabschnitt (55) ausmünden.

12. Griff nach einem der Ansprüche 10, 11, **dadurch gekennzeichnet, dass** der gekrümmte Abschnitt (53) der Führungsnuten (52) des Gehäuses (29) sich längs eines gekrümmten Bogens erstreckt, dessen Konkavität der Mittelebene (M) der Einheit zugewandt ist.

13. Griff nach einem der Ansprüche 10 bis 12, **dadurch gekennzeichnet, dass** die Führungsnasen (54) der Greifklappe (30) im Querschnitt einen kreisförmigen Umriss besitzen.

14. Griff nach einem der Ansprüche 10 bis 13, **dadurch gekennzeichnet, dass** die Führungsnuten (52) des Gehäuses (29) sich bezüglich der Mittelebene (M) der Einheit jenseits der Schwenk- und Rückhaltenuten (44) erstrecken.

15. Griff nach einem der Ansprüche 1 bis 14, **dadurch gekennzeichnet, dass** die beiden Gelenkbereiche (Z) identisch und bezüglich der Mittelebene (M) der Einheit symmetrisch sind.

16. Griff nach Anspruch 15, **dadurch gekennzeichnet, dass** das Gehäuse (29) und die Greifklappe (30) in Draufsicht ergänzende Umrisse besitzen, die im wesentlichen senkrecht zu der Mittelebene (M) der Einheit langgestreckt sind und für die diese Mittelebene (M) auch eine Symmetrieebene ist.

17. Griff nach Anspruch 16, **dadurch gekennzeichnet, dass** die Gelenkbereiche (Z) sich jeweils in Nähe der Enden des Gehäuses (29) und der Greifklappe (30) erstrecken.

18. Griff nach einem der Ansprüche 1 bis 17, **dadurch gekennzeichnet, dass** das Gehäuse (29) zwischen den beiden Gelenkbereichen (Z) innen, bezüglich seiner Frontfläche (34) zurückversetzt, eine Platte (59) aufweist, die für den Einbau eines Schlosses (60) geeignet ist.

19. Griff nach Anspruch 18, **dadurch gekennzeichnet, dass** die Platte (59) des Gehäuses (29) für den Einbau eines Schlosses (60) eine Öffnung (62) aufweist, die durch einen eindrückbaren Deckel (63) verschlossen ist.

20. Griff nach einem der Ansprüche 1 bis 19, **dadurch gekennzeichnet, dass** das Gehäuse (29) außen auf einer seiner Seiten vorstehend einen Lappen (41) aufweist, der dafür geeignet ist, mit dem Türrahmen (13), an dem der betreffende öffnende Flügel (12) montiert ist, durch Einrastung zusammenzuwirken.

21. Schrank mit einer Tür (12), **dadurch gekennzeichnet, dass** diese Tür (12) mit einem Griff (21) nach einem der Ansprüche 1 bis 20 ausgerüstet ist.
